# EUROPÄISCHE PATENTSCHRIFT

(11) **EP 0 420 088 B1**
(45) Veröffentlichungstag und Bekanntmachung des Hinweises auf die Patenterteilung: **15.06.1994**
(21) Anmeldenummer: 90118254.3
(22) Anmeldetag: 22.09.1990
(51) Int. Cl.: B23Q 3/08

(54) **Verfahren und Vorrichtung zum Entfernen eines Einbettkörpers vom eingebetteten Bauteil**
Method and device to separate an element encapsulated in a fusible material, from this fusible material
Procédé et dispositif pour séparer un élément encastré par moulage, du matériau de coulée

(30) Priorität: 29.09.1989 DE 3932571
(43) Veröffentlichungstag der Anmeldung: 03.04.1991
(73) Patentinhaber: MTU MOTOREN- UND TURBINEN-UNION MÜNCHEN GMBH, D-80976 München (DE)
(72) Erfinder: Pelz, Horst, D-8044 Unterschleissheim (DE); Klier, Armin, D-8056 Neufahrn (DE); Graf, Herbert, D-8051 Kirchdorf (DE)

(56) Entgegenhaltungen:
- DE-U- 7 827 603
- FR-A- 2 303 521
- GB-A- 1 252 029
- GB-A- 2 166 070
- GB-A- 2 166 070
- GB-A- 2 181 374
- US-A- 2 757 666

## Beschreibung

Die Erfindung betrifft ein Verfahren und eine Vorrichtung zum Entfernen eines Einbettkörpers aus niedriger schmelzendem Material von einem eingebetteten höher schmelzenden Metall- oder Keramikbauteil.

Es ist bekannt, daß derartige Einbettkörper aus niedrigschmelzenden Metallegierungen oder Thermoplasten um kompliziert geformte Metall- oder Keramikbauteile gegossen werden, um diese teilweise einzubetten, so daß der eingebettete Teil in Maschinen einspannbar oder fixierbar wird, während der nicht eingebettete Teil bearbeitet werden kann.

Ein bekanntes Verfahren zum Entfernen dieser Einbettkörper vom eingebetteten Bauteil ist das Abschmelzen des Einbettkörpers in heißem Öl. Dieses Verfahren hat die Nachteile der Ölentsorgung, der notwendigen Absaugung der Öldämpfe, der hohen Abschmelzdauer, des Abwaschens der Ölreste vom Bauteil, des Entfernens von Ölresten aus beispielsweise kapillaren Bohrungen im Bauteil, des Entsorgens des Abwaschmediums und der Dämpfe des Abwaschmediums und der damit verbundenen Umweltbelastungen.

Ein weiteres Verfahren besteht darin, mittels zweier Trennleisten den Einbettkörper in einer Presse zu spalten. Dieses Verfahren hat den Nachteil, daß hohe unkontrollierbare Drücke auf das eingebettete Bauteil ausgeübt werden, so daß eine hohe Ausschußgefahr besteht und stellenweise massive Rückstände des Einbettmaterials nachträglich entfernt werden müssen, was wiederum Ölbäder erforderlich macht.

Das Dokument GB-A-2 166 070 beschreibt ein Verfahren nach dem Oberbegriff des Anspruchs 1.

Aufgabe der Erfindung ist es ein gattungsgemäßes Verfahren und eine Vorrichtung anzugeben, wobei ein rückstandsarmes, das eingebettete Bauteil nicht belastendes oder verformendes Entfernen des Einbettkörpers bei gleichzeitig verminderter Ausschußgefahr gesichert ist und die dabei eingesetzten Mittel die Umwelt weniger belasten.

Gelöst wird diese Aufgabe durch ein Verfahren bei dem folgende Schritte durchgeführt werden:
a) Einbringen einer Nut in den Einbettkörper entlang der Einformbasis des eingebetteten Bauteils,
b) Entfernen der Hälften des Einbettkörpers vom eingebetteten Bauteil durch Aufweiten der Nut entlang der Einformbasis.

Dieses Verfahren überwindet die Nachteile der bisherigen Verfahren und spart erhebliche Entsorgungskosten ein, da kein Öl eingesetzt wird; außerdem werden die Ausschußkosten vermindert da der Einbettkörper unter Einwirkung minimaler Kräfte von dem eingebetteten Bauteil nach dem Einbringen einer Nut beispielsweise durch Fräsen, Sägen oder Schleifen entfernt wird.

Durch vorzugsweises Ausschmelzen der Nut werden selbst Vorschub- und Schneidkräfte sowie Schleifspuren einer möglichen spanabhebenden Einbringung der Nut vorteilhaft vermieden.

Das Ausschmelzen hat den weiteren Vorteil, daß beliebige und auch abgewinkelte oder gebogene Nutquerschnitte in einem Arbeitsgang realisierbar sind, da lediglich die Form des Ausschmelzwerkzeugs dem Querschnitt der Nut anzupassen ist.

Eine bevorzugte Ausführung des Verfahrens sieht ein Ausschmelzen bei Temperaturen zwischen 50 und 350°C, vorzugsweise zwischen 130 und 180°C vor. Der große Temperaturbereich hat den Vorteil, daß als Einbettmaterial auch Thermoplaste möglich sind. Im engeren Bereich sind niedrig schmelzende Metalle als Einbettmaterial einsetzbar, wie die Metallegierung Zinn/Wismut mit 30 Gew.% bis 70 Gew.% Wismut.

Die Differenz zwischen der Schmelztemperatur des Einbettmaterials und der Schmelztemperatur des eingebetteten Bauteils sollte mindestens 150°C betragen, so daß eine mögliche lokale Überhitzung des Bauteils vermieden wird.

Vorzugsweise wird das Ein- und Ausbetten für Bauteile aus Nickel- Kobalt- oder Titanbasislegierung eingesetzt,aus denen Leit- oder Laufschaufeln von Axialturbinen und Axialverdichtern hergestellt werden. Dabei können Schaufelfuß und Schaufelspitze bearbeitet werden, während die endbearbeitete Schaufel mit ihren kapillaren Bohrungen im eingebetteten Bereich eingespannt wird.

Das Entfernen der durch die eingebrachte Nut entstandenen Hälften des Einbettkörpers von dem eingebetteten Bauteil kann vorzugsweise durch Auseinanderziehen, -drehen, -schieben, -pressen oder -blasen erfolgen. Das hat den Vorteil, daß die Hälften des Einbettkörpers ohne große Rückstandsbildung vom Bauteil entfernt werden. Das Nachbearbeiten des Bauteils wird damit minimiert.

Die Aufgabe wird, soweit sie eine Vorrichtung zur Durchführung des Verfahrens betrifft, dadurch gelöst, daß die Vorrichtung mindestens ein federnd gelagert beheizbares Element, das in seinen Abmessungen dem Querschnitt der einzubringenden Nut entspricht und in mindestens einer Raumrichtung verfahrbar und um mindestens eine Raumrichtung drehbar angeordnet ist, aufweist und eine Aufnahmevorrichtung für den Einbettkörper besitzt.

Diese Vorrichtung hat den Vorteil, daß sie nicht spanabhebend sondern thermisch die Nut einbringt, und damit äußerst schonend auf das eingebettete Bauteil einwirkt, so daß Beschädigungen des Bauteils weitgehend vermieden werden. Ferner benötigt sie keine schnell rotierenden Werkzeuge, so daß sie eine hohe Standzeit aufweist und mit niedrigen Herstellungskosten erstellt werden kann.

Als Ausschmelzwerkzeug weist die Vorrichtung ein beheizbares Element auf, das vorteilhaft jedem gewünschten Nutquerschnitt angepaßt werden kann.

Die Ausbildung des beheizbaren Elementes sieht vor, daß es federnd gelagert ist, so daß beim Ausschmelzen die Spitze des beheizbaren Elementes der Kontur des eingebetteten Bauteils folgen kann, ohne daß ein Nachstellen erforderlich wird. Diese Selbstjustage ermöglicht eine vollständige Teilung des Einbettkörpers in zwei Hälften entlang der Einformbasis, so daß diese Hälften ohne Kraftaufwand beispielsweise mittels Anblasen eines Preßluftstrahls auseinanderfallen.

Ist das Bauteil derart eingebettet, daß es auf zwei gegenüberliegenden Seiten aus dem Einbettkörper herausragt, so weist die Vorrichtung vorzugsweise zwei beheizbare Elemente in Form von zwei Heißstäben auf, die gleichzeitig eine Nut auf der Vorder- und der Hinterkante des Bauteils ausschmelzen, so daß der Ausschmelzvorgang verkürzt wird und die Produktivität der Vorrichtung erhöht wird.

Eine weitere bevorzugte Ausbildung der Vorrichtung weist ein schneidenförmiges beheizbares Element auf, dessen Schneide die erfordeliche Nut entlang der Vorder- oder Hinterkante eines entsprechend geformten eingebetteten Bauteils in dem Einbettkörper bis auf einen Schmelzspalt vollständig ausfüllt. Dieser Schmelzspalt entsteht automatisch durch das Ablaufen des abgeschmolzenen Einbettkörpermaterials entlang der Wandung der Nut. Diese bevorzugte Ausbildung der Erfindung hat den Vorteil, daß der Ausschmelzvorgang weiter verkürzt wird.

Eine weitere Verminderung der Ausschmelzzeit wird durch eine Vorrichtung erreicht, die vorzugsweise zwei schneidenförmige beheizbare Elemente aufweist, die gleichzeitig die gesamte Nut auf der Vorder- und Hinterkante eines eingebetteten Bauteils ausfüllen, wobei die Vorrichtung ermöglicht, daß die Nut nicht bis an das Bauteil ausgeschmolzen wird. Das erfordert zwar beim Entfernen der Einbettkörperhälften einen höheren Kraftaufwand, hat aber den Vorteil, daß beim Ausschmelzen der Nut kein Schmelzmaterial in kapillare Bohrungen oder Schlitze des Bauteils eindringen kann.

Die beheizbaren Elemente sind in einer bevorzugten Ausbildung der Vorrichtung so angeordnet, daß eine vertikal oder bis zu einer Neigung von 60° gegenüber der Vertikalen verlaufende Nut entsteht. Eine derartige Anordnung sichert den Abfluß des aufgeschmolzenen Einbettmaterials in einen Auffangtiegel ohne zusätzliche Hilfsmaßnahmen wie beispielsweise Drehen des Einbettkörpers zum Ausschleudern oder Ablaufen der Schmelze.

Die Vorrichtung wird bevorzugt nummerisch gesteuert, so daß sie vorteilhaft in der Massenfertigung einsetzbar ist.

Die folgenden Figuren stellen beispielhafte Ausführungen der Erfindung dar:
- Fig. 1: zeigt das Prinzip einer Vorrichtung zur Durchführung des Verfahrens mit Heizstäben,
- Fig. 2: zeigt einen Schnitt A-B durch die Vorrichtung nach Fig. 1,
- Fig. 3: zeigt das Prinzip einer Vorrichtung zur Durchführung des Verfahrens mit Heizschneiden.

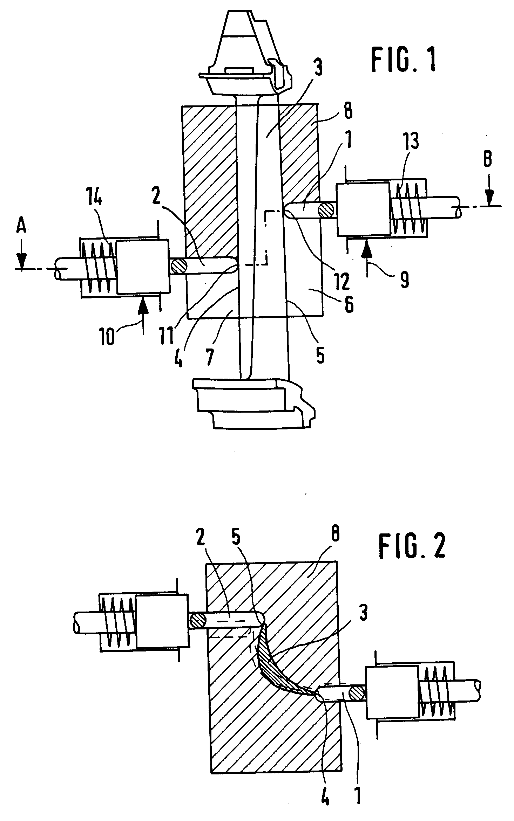

Fig. 1 zeigt das Prinzip einer Vorrichtung zur Durchführung des Verfahrens mit Heizstäben 1 und 2, die an einer Laufschaufel 3 aus einer Nickelbasislegierung mit einem Schmelzpunkt von 1330°C gleichzeitig die Vorder- 4 und Hinterkante 5 freilegen. Dabei werden zwei Nuten 6 und 7 aus dem quaderförmigen Einbettkörper 8 aus einer Zinn/Wismut-Legierung mit einem Schmelzpunkt von 137°C ausgeschmolzen. Die Heizstäbe 1 und 2 werden beim vertikalen Hochfahren in den Pfeilrichtungen 9 und 10 mit ihren halbrunden Spitzen 11 und 12 gegen die Vorder- 4 und Hinterkante 5 der Laufschaufel 3 mittels der Federlagerungen 13 und 14 gedrückt. Der Einbettkörper 8 zerfällt nach vollständiger Ausschmelzung der beiden Nuten 6 und 7 in zwei Hälften, die von der Laufschaufel 3 entfernt werden.

Fig. 2 zeigt einen Schnitt A-B durch die Vorrichtung nach Fig. 1, wobei die Leitschaufel 3 im Profil zu sehen ist, die an ihrer Vorder- 4 und Hinterkante 5 von den beiden Heizstäben 1 und 2 berührt wird, während aus dem Einbettkörper 8 im Bereich der Heizstäbe 1 und 2 Nuten ausgeschmolzen werden.

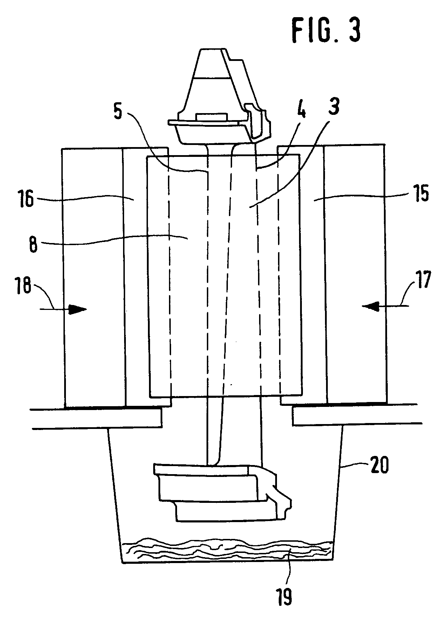

Fig. 3 zeigt das Prinzip einer Vorrichtung zur Durchführung des Verfahrens mit Heizschneiden 15 und 16, die in Pfeilrichtung 17 und 18 in den Einbettkörper eingeschmolzen werden. Dabei fließt das abgeschmolzene Einbettmaterial 19 in den Auffangtiegel 20 und kann wieder verwendet werden. Die Heizschneiden 15 und 16 können kurz vor Erreichen der Vorder- 4 und Hinterkante 5 angehalten werden, falls ein minimaler Reststeg aus Einbettmaterial die Vorder- 4 und Hinterkante 5 der Laufschaufel 3 vor Beschädigungen oder vor dem Eindringen von Schmelzgut in kapillare Bohrungen und Schlitze schützen soll. Nach dem Ausschmelzen der Nuten an der Vorder- 4 und Hinterkante 5 können die Hälften des Einbettkörpers 8 durch mechanisches Aufweiten der Nuten von der Laufschaufel 3 entfernt werden.

## Patentansprüche

1. Verfahren zum Entfernen eines massiven Einbettkörpers aus niedrig schmelzendem Material von einem eingebetteten höher schmelzenden Metall oder Keramikbauteil durch Abschmelzen des Einbettkörpers vom eingebetteten Bauteil mit folgenden Verfahrensschritten,
a) Nuteinbringung in den Einbettkörper dadurch gekennzeichnet, daß die Nut entlang der Einformbasis des eingebetteten Bauteils (3) durch Ausschmelzen des Einbettmaterials des Einbettkörpers (8) verläuft.
b) Entfernen der Hälften des Einbettkörpers (8) vom eingebetteten Bauteil (3) unter Aufweiten der Nut (6) entlang der Einformbasis,

2. Verfahren nach Anspruch 1, dadurch gekennzeichnet, daß das Einbringen der Nut (6) durch Ausschmelzen des Einbettmaterials des Einbettkörpers (8) erreicht wird.

3. Verfahren nach Anspruch 1 oder 2, dadurch gekennzeichnet, daß das Einbringen der Nut (6) durch Ausschmelzen des Einbettmaterials bei Temperaturen zwischen 50 und 350°C, vorzugsweise zwischen 130 und 180°C durchgeführt wird.

4. Verfahren nach Anspruch 1 bis 3, dadurch gekennzeichnet, daß das Einbettmaterial eine Metallegierung aus Zinn und Wismut mit 30 Gew.% bis 70 Gew.% Wismut ist, in die bei Temperaturen zwischen 130°C und 180°C eine Nut (6) eingeschmolzen wird.

5. Verfahren nach Anspruch 1 bis 3, dadurch gekennzeichnet, daß das Einbettmaterial ein Thermoplast ist, in den bei Temperaturen zwischen 50 bis 130°C eine Nut (6) eingeschmolzen wird.

6. Verfahren nach Anspruch 1 bis 5, dadurch gekennzeichnet, daß das Einbettmaterial von Metall- oder Keramikbauteilen mit einem Schmelzpunkt über 500°C entfernt wird.

7. Verfahren nach Anspruch 1 bis 6, dadurch gekennzeichnet, daß es zum Entfernen von Einbettkörpern (8) von Bauteilen (3) aus Nickel-, Kobalt- oder Titanbasislegierungen angewandt wird.

8. Verfahren nach Anspruch 1 bis 7, dadurch gekennzeichnet, daß es zum Entfernen von Einbettkörpern (8) von Leit- oder Laufschaufeln eines Axialverdichters oder einer Axialturbine eingesetzt wird.

9. Verfahren nach Anspruch 1 bis 8, dadurch gekennzeichnet, daß zum Entfernen der beiden Hälften des Einbettmaterial vom eingebetteten Bauteil (3), diese auseinandergezogen, auseinandergedreht, auseinandergeschoben, auseinandergepreßt oder auseinandergeblasen werden.

10. Vorrichtung geeignet für die Durchführung des Verfahrens nach Anspruch 1 mit einer Aufnahmevorrichtung für den Einbettkörper (8) und mit mindestens einem beheizbaren Element (1), das in mindestens einer Raumrichtung verfahrbar ist, dadurch gekennzeichnet, daß das beheizbare Element (1) in seinem Querschnitt der einzubringenden Nut (6) entspricht und federnd gelagert ist und dessen Spitze (11) von der Kontur des eingebetteten Bauteils (3) entlang seiner Einformbasis geführt wird, und um mindestens eine Raumrichtung drehbar angeordnet ist.

11. Vorrichtung nach Anspruch 10, dadurch gekennzeichnet, daß sie zwei Heizstäbe (1 und 2) aufweist die gleichzeitig eine Nut (6 und 7) an einer Vorder- (4) und einer Hinterkante (5) eines eingebetteten Bauteils (3) aufschmelzen.

12. Vorrichtung nach Anspruch 10 bis 11, dadurch gekennzeichnet, daß das beheizbare Element eine Form hat, die einseitig beim Ausschmelzen eine Seite der Nut (6) vollständig bis auf einen Schmelzspalt ausfüllt.

13. Vorrichtung nach Anspruch 10 bis 12, dadurch gekennzeichnet, daß zwei beheizbare Elemente beidseitig und gleichzeitig beim Ausschmelzen die gesamte zum Entfernen des Einbettkörpers erforderliche Nut (6) ausfüllen.

14. Vorrichtung nach Anspruch 10 bis 13, dadurch gekennzeichnet, daß die Nut (6) beim Ausschmelzen vertikal oder bis zu einer Neigung von 60° gegenüber der Vertikalen angeordnet ist.

15. Vorrichtung nach Anspruch 10 bis 14, dadurch gekennzeichnet, daß das Einbringen der Nut (6) nummerisch gesteuert wird.

## Claims

1. Process for removing a solid embedding member of low-melting material from an embedded higher melting metal or ceramic component by melting the embedding member off the embedded component by means of the following process steps:
a) forming a channel in the embedding member (1);
b) removing the halves of the embedding member (8) from the embedded component (3) by widening the channel (6) along the moulding edge;
characterised in that the channel extends along the moulding edge of the embedded component (3), the process melting out the embedding material of the embedding member (8) (3).

2. Process according to Claim 1, characterised in that the channel (6) is provided by melting out the embedding material of the embedding member (8).

3. Process according to Claim 1 or 2, characterised in that the channel (6) is provided by melting out the embedding material at temperatures of between 50°C and 350°C, preferably of between 130°C and 180°C.

4. Process according to Claims 1 to 3, characterised in that the embedding material is a metal alloy of tin and bismuth with between 30 and 70 weight % of bismuth in which alloy a channel (6) is melted at temperatures of between 130°C and 180°C.

5. Process according to Claims 1 to 3, characterised in that the embedding material is a thermoplastic into which a channel (6) is melted at temperatures of between 50°C and 130°C.

6. Process according to Claims 1 to 5, characterised in that the embedding material is removed from metal or ceramic components with a melting point of above 500°C.

7. Process according to Claims 1 to 6, characterised in that it is used to remove embedding members (8) from components (3) of nickel-, cobalt- or titanium-based alloys.

8. Process according to Claims 1 to 7, characterised in that it is used to remove embedding members (8) from guide vanes or rotor blades of an axial compressor or of an axial turbine.

9. Process according to Claims 1 to 8, characterised in that in order to remove the two halves of the embedding material from the embedded component (3) they are pulled apart, rotated apart, pushed apart, pressed apart or blown apart.

10. Device suitable for performing the process according to Claim 1 having an accommodating device for the embedding member (8) and having at least one heatable element (1) which can move in at least one direction in space, characterised in that the heatable element (1) corresponds with respect to its cross-section to the channel (6) to be inserted, is resiliently mounted, its tip (11) is guided by the contour of the embedded component (3) along its moulding edge, and it is disposed so as to rotate about at least one direction in space.

11. Device according to Claim 10, characterised in that it comprises two heating rods (1 and 2) which simultaneously melt a channel (6 and 7) on a front edge (4) and a rear edge (5) of an embedded component (3).

12. Device according to Claims 10 and 11, characterised in that the heatable element has a shape which on one side fills one side of the channel (6) completely apart from a melting gap during the melting process.

13. Device according to Claims 10 to 12, characterised in that two heatable elements on either side simultaneously fill the entire channel (6), necessary for removing the embedding member, during the melting process.

14. Device according to Claims 10 to 13, characterised in that the channel (6) during the melting process is disposed vertically or inclined up to 60° relative to the vertical.

15. Device according to Claims 10 to 14, characterised in that the insertion of the channel (6) is controlled numerically.

## Revendications

1. Procédé pour séparer une masse d'enrobage en un matériau de bas point de fusion d'un élément de construction en métal ou en céramique enrobé, de point de fusion plus élevé, en séparant par fusion la masse d'enrobage de l'élément de construction enrobé selon les étapes suivantes :
a) mise en place d'une gorge dans la masse d'enrobage caractérisée en ce que la gorge s'étend le long de la base de moulage de l'élément de construction (3) enrobé par fusion du matériau de la masse d'enrobage (8) le long de la base de moulage de l'élément de construction enrobé (3),
b) enlèvement des moitiés de la masse d'enrobage (8) de l'élément de construction enrobé (3) en élargissant la gorge (6) le long de la base de moulage.

2. Procédé selon la revendication 1, caractérisé en ce que la mise en place de la gorge (6) est obtenue par fusion du matériau d'enrobage de la masse d'enrobage (8).

3. Procédé selon la revendication 1 ou la revendication 2, caractérisé en ce que la mise en place de la gorge (6) est effectuée par fusion du matériau d'enrobage à des températures comprises entre 50 et 350 °C, de préférence entre 130 et 180°C.

4. Procédé selon les revendications 1 à 3, caractérisé en ce que le matériau d'enrobage est un alliage métallique d'étain et de bismuth avec de 30% en poids à 60% en poids de bismuth, dans lequel une gorge (6) est fondue à des températures comprises entre 130°C et 180°C.

5. Procédé selon les revendications 1 à 3, caractérisé en ce que le matériau d'enrobage est un thermoplastique dans lequel une gorge (6) est fondue à des températures entre 50 et 130°C.

6. Procédé selon l'une des revendications 1 à 5, caractérisé en ce que le matériau d'enrobage est éloigné des éléments de construction en métal ou en céramique avec un point de fusion supérieur à 500°C.

7. Procédé selon les revendications 1 à 6, caractérisé en ce qu'il est mis en oeuvre pour la séparation de masse d'enrobage (8) d'éléments de construction (3) en alliage de nickel, de cobalt ou à base de titane.

8. Procédé selon l'une des revendications 1 à 7, caractérisé en ce qu'il est mis en oeuvre pour séparer des masses d'enrobage (8), des aubes conductrices ou des aubes mobiles d'un compresseur axial ou bien d'une turbine axiale.

9. Procédé selon l'une des revendications 1 à 8, caractérisé en ce que pour séparer les deux moitiés du matériau d'enrobage de l'élément de construction enrobé (3), ces moitiés sont écartées par traction l'une de l'autre, sont tournées l'une par rapport à l'autre, décalées l'une par rapport à l'autre, séparées par pression ou séparées par soufflage.

10. Dispositif prévu pour la mise en oeuvre du procédé selon la revendication 1 avec un dispositif de réception pour la masse d'enrobage (8) et avec au moins un élément susceptible d'être chauffé (1), qui est susceptible d'être déplacé dans au moins une direction, dispositif caractérisé en ce que l'élément susceptible d'être chauffé (1) correspond par sa section transversale à la gorge (6) à pratiquer et est monté élastiquement et que sa pointe (11) est guidée à partir du contour de l'élément de construction (3) enrobé le long de sa base de moulage (3), l'élément étant susceptible d'être tourné autour d'au moins une direction.

11. Dispositif selon la revendication 10, caractérisé en ce qu'il comporte deux barreaux chauffés (1 et 2) qui fondent simultanément une gorge (6 et 7) sur un côté avant (4) et un côté arrière (5) d'un élément de construction enrobé (3).

12. Dispositif selon une des revendications 10 et 11, caractérisé en ce que l'élément susceptible d'être chauffé a une forme qui, d'un côté, lors de la fusion remplit un côté de la gorge (6) complètement jusqu'à une fente de fusion.

13. Dispositif selon une des revendications 10 à 12, caractérisé en ce que deux éléments susceptibles d'être chauffés, remplissent des deux côtés et simultanément la gorge totale (6) nécessaire pour la séparation de la masse d'enrobage.

14. Dispositif selon une des revendications 10 à 13, caractérisé en ce que la gorge (6) est disposée lors de la fusion verticalement ou bien jusqu'à une inclinaison de 60° par rapport à la verticale.

15. Dispositif selon une des revendications 10 à 14, caractérisé en ce que la mise en place de la gorge (6) est commandée numériquement.
